# EUROPÄISCHE PATENTSCHRIFT

(11) **EP 3 371 571 B1**
(45) Veröffentlichungstag und Bekanntmachung des Hinweises auf die Patenterteilung: **03.01.2024**
(21) Anmeldenummer: 16797769.3
(22) Anmeldetag: 03.11.2016
(51) Int. Cl.: G01N 15/14

(54) **VERFAHREN ZUM NACHWEIS VON NEUTROPHILEN EXTRAZELLULÄREN FALLEN**
METHOD OF DETECTING NEUTROPHIL EXTRACELLULAR TRAPS
PROCÉDÉ DE DÉCÈLEMENT DE PIÈGES EXTRACELLULAIRES DES NEUTROPHILES

(30) Priorität: 04.11.2015 EP 15192865
(43) Veröffentlichungstag der Anmeldung: 12.09.2018
(73) Patentinhaber: Siemens Healthcare Diagnostics Products GmbH, 35041 Marburg (DE)
(72) Erfinder: PRECHTL, Gottfried, 2051 Zellendorf (AT)
(86) Internationale Anmeldenummer: PCT/EP2016/076521
(87) Internationale Veröffentlichungsnummer: WO 2017/076952

(56) Entgegenhaltungen:
- EP-A1- 3 165 899
- US-A1- 2010 273 168
- MATHILDE GAVILLET ET AL: "Flow cytometric assay for direct quantification of neutrophil extracellular traps in blood samples", AMERICAN JOURNAL OF HEMATOLOGY, Bd. 90, Nr. 12, 6. Oktober 2015 (2015-10-06), Seiten 1155-1158, XP055266054, US ISSN: 0361-8609, DOI: 10.1002/ajh.24185 in der Anmeldung erwähnt
- MARISKA MEIJER ET AL: "Experimental immunology Extracellular Traps: How to isolate and quantify extracellular DNA (ET-DNA)", CENTRAL-EUROPEAN JOURNAL OF IMMUNOLOGY, Bd. 4, 1. Januar 2012 (2012-01-01), Seiten 321-325, XP055268273, PL ISSN: 1426-3912, DOI: 10.5114/ceji.2012.32719

## Beschreibung

Die Erfindung betrifft ein Verfahren zu einem insbesondere vollautomatisierten Nachweis von neutrophilen extrazellulären Fallen in einer Probe eines Biofluids, insbesondere in einer Blutprobe. Die Erfindung betrifft weiter ein Analysesystem zu einer insbesondere vollautomatisierten Durchführung dieses Verfahrens.

Neutrophile Granulozyten verfügen über verschiedene Mechanismen, mit denen sie Bakterien im peripheren Blutstrom eliminieren können. Hierzu zählt die Phagozytose, bei der die neutrophilen Granulozyten Bakterien aufnehmen und verdauen. Weiter können neutrophile Granulozyten bakterizide Toxine abgeben, um Bakterien abzutöten. Ein weiterer Mechanismus von neutrophilen Granulozyten zur Elimination von Bakterien ist die Ausformung und Abgabe von Netzen aus DNA-Fäden mit Proteinen, die eine extrazelluläre, faserige Matrix bilden, welche als neutrophile extrazelluläre Fallen oder auch als Neutrophil Extracellular Traps (NETs) bezeichnet werden und zum Einfangen von Bakterien dienen. Die eingefangenen Bakterien werden dann mittels bakteriziden Toxinen, die von den neutrophilen Granulozyten in die neutrophilen extrazellulären Fallen abgegeben werden, abgetötet. Die neutrophilen extrazellulären Fallen werden nach der Abtötung der Bakterien wieder abgebaut und entsorgt. Eine nicht vollständige Entsorgung von neutrophilen extrazellulären Fallen wird mit verschiedenen autoimmunologischen Krankheitsbildern in Verbindung gebracht. Weiter wird angenommen, dass neutrophile extrazelluläre Fallen auch mit ein Grund sind für den Anstieg des Thromboserisikos bei Infektionen, da sich auch Thrombozyten in neutrophilen extrazellulären Fallen verfangen können und so das Thromboserisiko ansteigen kann. Weiter werden neutrophile extrazelluläre Fallen mit infektiösen, inflammatorischen, autoimmunologischen und thrombotischen Erkrankung, wie beispielsweise Sepsis, Präeklampsie, Malaria und Lupus erythematodes in Verbindung gebracht.

Neutrophile extrazelluläre Fallen können mittels elektronenmikroskopischer oder lichtmikroskopischer Analysemethoden nachgewiesen werden. Weiter ist ihr Nachweis mittels antikörperbasierter Nachweisverfahren möglich, beispielsweise mit einem Enzyme Linked Immunosorbent Assay (ELISA) oder mittels eines fluorometrischen Durchflusszytometerverfahrens, siehe z.B. Gavillet, Mathilde, et al. "Flow cytometric assay for direct quantification of neutrophil extracellular traps in blood samples". American Journal of Hematology, 2015. Letzteres hat jedoch den Nachteil, dass spezifische Antikörper hierzu benötigt werden.

Der Nachweis von neutrophilen extrazellulären Fallen kann beispielsweise helfen, eine entsprechende Diagnose bei autoimmunologischen Krankheitsbildern zu stellen, die mit einer veränderten, beispielweise erhöhten, Konzentration von neutrophilen extrazellulären Fallen einhergehen. Weiter kann der Nachweis von neutrophilen extrazellulären Fallen insbesondere helfen, eine verbesserte Einschätzung des Thromboserisikos, beispielsweise bei vorliegenden Infektionen, zu ermöglichen. Auch bei Lungenerkrankungen und metastasierenden Krebserkrankungen scheinen neutrophile extrazelluläre Fallen eine bedeutende Rolle zu spielen. Der Nachweis von neutrophilen extrazellulären Fallen in Proben von Biofluiden, insbesondere in Blutproben, soll möglichst vollautomatisiert erfolgen. Gegenwärtig ist dies nur mit aufwändigen antikörperbasierter Nachweisverfahren möglich.

Aufgabe der Erfindung ist es, ein vereinfachtes Verfahren zum Nachweis von neutrophilen extrazellulären Fallen in Proben eines Biofluids anzugeben, welches sich ebenfalls automatisiert mit optischen Analysesystemen durchführen lässt und für welches keine Antikörper benötigt werden.

Diese Aufgabe wird erfindungsgemäß durch ein Verfahren nach Anspruch 1 gelöst.

Die Erfindung geht dabei von der Überlegung aus, dass sich mit einem zytometrischen Verfahren, welches in Durchflussgeometrie durchgeführt wird, bei einer Gegenüberstellung der zweidimensionalen Messwerte aus Lichtintensitätsabnahme, z.B. Absorptionsgrad, und zugehörigem Streulichtintensität in einem Zytogramm die neutrophilen extrazellulären Fallen vergleichsweise einfach von retikulierten Thrombozyten, reifen Thrombozyten und anderen Teilchen, beispielsweise Erythrozyten und Fragmente von Erythrozyten, getrennt werden können.

Da neutrophile extrazelluläre Fallen sehr viel Nukleinsäure enthalten, unterscheidet sich nach selektiver Anfärbung deren Absorptionsgrad von reifen Thrombozyten, die wenig Nukleinsäure enthalten. Insofern kann in einem Zytogramm aus Absorptionsgrad und Brechungsindex ein Teilbereich mit höherem Absorptionsgrad den von neutrophilen extrazellulären Fallen stammenden Messwerten zugeordnet werden. Bei der in den neutrophilen extrazellulären Fallen enthaltenen Nukleinsäure handelt es sich um DNA. Bei der in den reifen Thrombozyten enthaltenen Nukleinsäure handelt es sich um RNA.

Andererseits zeigen Erythrozyten und Fragmente von Erythrozyten aufgrund ihres Hämoglobingehalts gegenüber neutrophilen extrazellulären Fallen einen höheren Brechungsindex, so dass ein Teilbereich niedrigeren Brechungsindexes den von neutrophilen extrazellulären Fallen stammenden Messwerten zugeordnet werden kann. Weiter zeigen retikulierte Thrombozyten, die noch relativ viel Nukleinsäure enthalten, ebenfalls einen höheren Brechungsindex gegenüber neutrophilen extrazellulären Fallen. Bei der in den retikulierten Thrombozyten enthaltenen Nukleinsäure handelt es sich um RNA.

Insofern kann aus einer zytometrischen Erfassung aus Absorptionsgrad und Brechungsindex ein Teilbereich an Messwerten den neutrophilen extrazellulären Fallen zugeordnet werden. Die Anzahl der entsprechend selektierten Messwerte wird dann zur Bestimmung der Konzentration der neutrophilen extrazellulären Fallen herangezogen. Es hat sich dabei gezeigt, dass die Messung gegenüber kleinen Blutkörperchen, wie beispielsweise kleinen Erythrozyten, und Zellfragmenten weitgehend interferenzfrei ist.

Eine insbesondere zweidimensionale zytometrische Messung von optischen partikelrelevanten Merkmalen gehört zum Standardverfahren von automatisierten optischen Analysesystemen von Biofluiden. Jedoch wird die Anfärbung von Nukleinsäuren mittels eines Farbstoffs bislang hauptsächlich zur Bestimmung der Anzahl oder der Fraktion an Retikulozyten durchgeführt. Die Erfindung unterscheidet sich jedoch hiervon.

Gegenstand der Erfindung ist demnach insbesondere ein Verfahren zum Nachweis von neutrophilen extrazellulären Fallen in einer Probe eines Biofluids, insbesondere in einer Blutprobe, wobei der Probe des Biofluids ein für Nukleinsäure selektiver Farbstoff zugeführt wird, wobei nach der Anfärbung in der Probe im Absorptionsbereich des Farbstoffes eine Vielzahl von optischen, partikelbedingten Messwerten jeweils als Tupel aus einem Messwert eines ersten optischen Merkmals und eines zweiten optischen Merkmals bestimmt wird, wobei Messwerte des ersten optischen Merkmals innerhalb eines Teilbereiches aller gemessenen Werte des ersten optischen Merkmals und des zweiten optischen Merkmals innerhalb eines Teilbereiches aller gemessenen Werte des zweiten optischen Merkmals selektiert werden, und wobei die Anzahl der selektierten Messwerte zum Nachweis der neutrophilen extrazellulären Fallen mit einem vorbestimmten Grenzwert verglichen wird.

Neutrophile extrazelluläre Fallen sind in der Probe des Biofluids nachgewiesen, wenn die Anzahl der selektierten Messwerte größer oder gleich des vorbestimmten Grenzwerts ist. Keine neutrophilen extrazellulären Fallen sind in der Probe nachgewiesen, wenn die Anzahl der selektierten Messwerte kleiner als der vorbestimmte Grenzwert ist.

Der vorbestimmte Grenzwert wird beispielsweise durch entsprechende Messungen an einer Mehrzahl von Proben, die neutrophile extrazelluläre Fallen in unterschiedlichen, bekannten Konzentrationen enthalten ermittelt. Vorteilhafterweise liegen die Konzentrationen dabei in den klinisch relevanten Konzentratoinsbereichen für neutrophile extrazelluläre Fallen. Die Mehrzahl von Proben umfasst dabei vorteilhafterweise auch Proben, die keine neutrophilen extrazellulärne Fallen und/oder neutrophile extrazelluläre Fallen nur in sehr geringfügigerer Anzahl enthalten.

In einer weiteren bevorzugten Ausgestaltung handelt es ich bei der Streulichtintensität um die Intensität des um einen Winkel innerhalb eines Winkelbereichs von 5 bis 15 Grad, bevorzugt von 5 bis 8 Grad, durch die Probe abgelenkten Lichts.

In einer weiteren bevorzugten Ausgestaltung wird mittels der Streulichtintensität der Brechungsindex ermittelt oder es wird die Streulichtintensität als ein Maß für den Brechungsindex verwendet, wobei es sich bei dem Brechungsindex um das erste optische Merkmal handelt.

In einer weiteren vorteilhaften Ausgestaltung wird die obere Grenze des Teilbereiches der Streulichtintensität, insbesondere veränderlich über den Absorptionsgrad, derart gewählt, dass die Streulichtintensitäten der neutrophilen extrazellulären Fallen von Streulichtintensitäten der retikulierten Thrombozyten und der Erythrozyten und Fragmenten von Erythrozyten separiert werden, so dass eine Interferenz ausgeschlossen oder zumindest minimiert wird. Gewöhnlich liegen die Streulichtintensitäten von Erythrozyten und retikulierten Thrombozyten einerseits, und neutrophilen extrazellulären Fallen andererseits, ausreichend weit auseinander, so dass eine entsprechende Grenze leicht durch die Betrachtung von entsprechenden Streulichtintensitäten festgelegt werden kann. Derartige Streulichtintensitäten können bei automatisierten Analysesystemen aus entsprechenden Ausgabekanälen entnommen werden.

In einer weiteren vorteilhaften Ausgestaltung wird die untere Grenze des Teilbereiches der Lichtintensitätsabnahme, insbesondere veränderlich über die Streulichtintensität, derart gewählt, dass Lichtintensitätsabnahmen von neutrophilen extrazellulären Fallen von Lichtintensitätsabnahmen der Thrombozyten separiert werden, so dass eine Interferenz ausgeschlossen oder zumindest minimiert wird. Gewöhnlich liegen die Lichtintensitätsabnahmen von reifen Thrombozyten einerseits, und neutrophilen extrazellulären Fallen andererseits, ausreichend weit auseinander, so dass eine entsprechende Grenze leicht durch die Betrachtung entsprechender Lichtintensitätsabnahmen festgelegt werden kann. Derartige Lichtintensitätsabnahmen können bei automatisierten Analysesystemen aus entsprechenden Ausgabekanälen entnommen werden. Bevorzugt handelt es sich bei der Lichtintensitätsabnahme um den Absorptionsgrad.

Die Erfindung ermöglicht weiter auch eine weitgehend interferenzfreie Erfassung der neutrophilen extrazellulären Fallen gegenüber anderen Teilchen, die sich gewöhnlich im peripheren Blut befinden, die eine vergleichbare Lichtintensitätsabnahme, bevorzugt einen vergleichbaren Absorptionsgrad, oder eine vergleichbare Streulichtintensität, bevorzugt einen vergleichbaren Brechungsindex, wie die neutrophilen extrazellulären Fallen aufweisen, bzw. herbeiführen. Es hat sich gezeigt, dass derartige Teilchen gegenüber den neutrophilen extrazellulären Fallen einen höheren Brechungsindex und/oder ein anderes Verteilungsmuster im Absorptionsgrad zeigen, bzw. entsprechend eine höhere Streulichtintensität und/oder ein anderes Verteilungsmuster bezüglich der Lichtintensitätsabnahme zeigen.

Bevorzugt wird die untere Grenze des Teilbereichs der Streulichtintensität, insbesondere veränderlich über die Lichtintensitätsabnahme oder den Absorptionsgrad, derart gewählt, dass mindestens 80 %, bevorzugt mindestens 90 %, besonders bevorzugt mindestens 95 % der Messwerte, die auf neutrophile extrazelluläre Fallen zurück gehen, eine größere Streulichtintensität als die Streulichtintensität, bei dem die Grenze verläuft, aufweisen. Bevorzugt wird die untere Grenze des Teilbereichs der Streulichtintensität dabei durch deren untere Erfassungsgrenze gebildet.

Bevorzugt wird die obere Grenze des Teilbereiches der Lichtintensitätsabnahme oder des Absorptionsgrades, insbesondere veränderlich über die Streulichtintensität oder den Brechungsindex, derart gewählt, dass mindestens 80 %, bevorzugt mindestens 90 %, besonders bevorzugt mindestens 95 % der Messwerte, die auf neutrophile extrazelluläre Fallen zurück gehen, eine kleinere Lichtintensitätsabnahme oder einen kleineren Absorptionsgrad als die Lichtintensitätsabnahme oder den Absorptionsgrad, bei dem die Grenze verläuft, aufweisen. Bevorzugt wird die obere Grenze des Teilbereiches der Lichtintensitätsabnahme oder des Absorptionsgrades dabei durch die maximal messbare Lichtintensitätsabnahme oder durch den maximal messbaren Absorptionsgrad festgelegt.

In einer weiteren vorteilhaften Ausgestaltung werden die Grenzen des Teilbereiches der Lichtintensitätsabnahme, insbesondere veränderlich über die Streulichtintensität, und der Streulichtintensitäten, insbesondere veränderlich über die Lichtintensitätsabnahme, derart gewählt, dass mindestens 80 %, bevorzugt mindestens 90 %, besonders bevorzugt mindestens 95 % der Messwerte, die auf neutrophile extrazelluläre Fallen zurück gehen, innerhalb des durch die gewählten Grenzen festgelegten Teilbereichs liegen. Bevorzugt handelt es sich bei der Lichtintensitätsabnahme um den Absorptionsgrad und/oder bei der Streulichtintensität um den Brechungsindex.

Zum Ermitteln der Messwerte, die jeweils ein Tupel aus Lichtintensitätsabnahme und Streulichtintensität umfassen, wird beispielsweise in Durchflussgeometrie zeitaufgelöst die jeweils durch im Messvolumen befindliche Partikel verursachte Streuung, Reflexion und/oder Transmission eines Lichtstrahls, insbesondere eines Laserstrahls, erfasst. Aus den in verschiedenen Messgeometrien gemessenen optischen Parametern werden dann als Messwerte jeweils Tupel aus optischen Merkmalen, insbesondere auch Brechungsindex und Absorptionsgrad, ermittelt, die Rückschlüsse auf die als disperse Phase in dem Biofluid enthaltenen Partikeln erlauben. Diese sogenannte Durchflusszytometrie ist hierbei ein gängiges Messverfahren moderner optischer Analysesysteme zur Analyse von Biofluiden, wie sie beispielsweise zu einer vollautomatisierten Erstellung eines Blutbildes oder dergleichen eingesetzt werden. Bevorzugt wird daher das vorbeschriebene Verfahren, insbesondere vollautomatisiert, in einem Analysesystem zur optischen Analyse einer Probe eines Biofluids durchgeführt. Als ein geeigneter Farbstoff wird bevorzugt Oxazin 750 verwendet. Oxazin 750 wird häufig zur Anfärbung von Nukleinsäure und vorliegend zur Anfärbung von DNA der neutrophilen extrazellulären Fallen eingesetzt. Weitere Nukleinsäure selektive Farbstoffe sind z.B. Methylthioniniumchlorid, Ethidiumbromid und Acridinorange. Bevorzugt handelt es sich bei der Lichtintensitätsabnahme um den Absorptionsgrad und/oder bei der Streulichtintensität um den Brechungsindex.

Bevorzugt handelt es sich bei dem der Probe des Biofluids zugeführten, für Nukleinsäure selektiven Farbstoff um einen nicht antikörperassoziierten Farbstoff. Besonders bevorzugt handelt es sich bei dem Farbstoff um einen nicht antikörpergebundenen Farbstoff.

Hypochrome Erythrozyten, also Erythrozyten mit einem vergleichsweise geringen Hämoglobingehalt, retikulierte Thrombozyten und reife Thrombozyten können jedoch jeweils in Bereichen des Absorptionsgrades einen Brechungsindex zeigen, der in der Nähe der Streulichtintensitäten von neutrophilen extrazellulären Fallen liegt. Aus diesem Grund wird in einer vorteilhaften Variante die Häufigkeitsverteilung der gemessenen Streulichtintensitäten ermittelt und hierin eine Population der Erythrozyten, der retikulierten Thrombozyten bzw. der reifen Thrombozyten in einem Bereich höherer Streulichtintensitäten und eine Population der neutrophilen extrazelluläre Fallen in einem Bereich niedrigerer Streulichtintensitäten identifiziert. Als obere Grenze des Teilbereiches der Streulichtintensität wird dann eine Streulichtintensität aus einem Bereich zwischen den beiden jeweiligen Populationen gewählt. Auf diese Weise wird sichergestellt, dass eine mögliche Interferenz von Messwerten von neutrophilen extrazelluläre Fallen und Messwerten von Erythrozyten, retikulierter Thrombozyten bzw. reifer Thrombozyten weitestgehend vermieden wird. Analog kann bezüglich der Wahl von Grenzen bezüglich der Streulichtintensitäten von neutrophilen extrazellulären Fallen und anderen Partikeln verfahren werden. Analog kann ebenfalls bezüglich der Wahl von Grenzen bezüglich der Lichtintensitätsabnahme bedingt durch neutrophilen extrazellulären Fallen und anderen Partikeln, beispielsweise Erythrozyten, retikulierten Thrombozyten und/oder reifen Thrombozyten verfahren werden, um mögliche Interferenzen von Messwerten von neutrophilen extrazellulären Fallen mit den jeweiligen anderen Partikeln in der Probe weitgehend zu vermeiden. Bevorzugt handelt es sich bei der Lichtintensitätsabnahme um den Absorptionsgrad und/oder bei der Streulichtintensität um den Brechungsindex.

In einer weiteren bevorzugten Ausgestaltung des Verfahrens werden in der Probe des Biofluids, insbesondere automatisiert, die Absorptionsgrade und/oder Brechungsindizes von retikulierten Thrombozyten, reifen Thrombozyten und/oder Erythrozyten, bzw. die auf diese Zellen zurückgehenden Lichtintensitätsabnahmen und/oder Streulichtintensitäten, gemessen. Dies hat den Vorteil, dass neben dem Nachweis der neutrophilen extrazellulären Fallen die Probe auch bezüglich weiterer Partikel charakterisiert werden kann.

In einer weiteren bevorzugten Ausgestaltung des Verfahrens wird die Anzahl der selektierten Messwerte zum qualitativen und/oder zum quantitativen Nachweis der neutrophilen extrazellulären Fallen herangezogen. Dies hat den Vorteil, dass die Probe hinsichtlich der in ihr enthaltenen neutrophilen extrazellulären Fallen genauer charakterisiert werden kann.

In einer weiteren bevorzugten Ausgestaltung des Verfahrens wird die Anzahl der selektierten Messwerte zur Bestimmung der Konzentration der neutrophilen extrazellulären Fallen herangezogen. Die Konzentration von neutrophilen extrazellulären Fallen kann beispielsweise in den Einheiten Anzahl von neutrophilen extrazellulären Fallen pro Mikroliter Probe des Biofluid angegeben werden. Die Angabe der Anzahl der neutrophilen extrazellulären Fallen kann dabei beispielsweise in einer beliebigen Einheit, die direkt proportional zur Anzahl der partikelbezogenen Messwerte ist, die neutrophilen extrazellulären Fallen zugeordnet sind, erfolgen. Beispielsweise kann die Einheit, in der die Anzahl der neutrophilen extrazellulären Fallen angegeben wird, mittels einer geeigneten Probe, die eine vorbestimmte Anzahl von neutrophilen extrazellulären Fallen enthält, kalibriert werden. Dies hat den Vorteil, dass die Probe hinsichtlich der in ihr enthaltenen neutrophilen extrazellulären Fallen besonders genau charakterisiert werden kann.

In bevorzugter Ausführungsform des Verfahrens enthält die Probe beim Nachweis der neutrophilen extrazellulären Fallen keine der Probe hinzugefügten Antikörper.

In bevorzugter Ausführungsform des Verfahrens enthält die Probe neutrophile extrazelluläre Fallen.

In weiterer bevorzugter Ausführungsform des Verfahrens hilft der Nachweis der neutrophilen extrazellulären Fallen bei der Diagnose einer infektiösen, inflammatorischen, autoimmunologischen und/oder thrombotischen Erkrankung. Bevorzugt handelt es sich bei den Erkrankungen um Sepsis, Erkrankungen mit einem erhöhten Thromboserisiko und/oder diverse Autoimmunologieerkrankungen.

In weiterer bevorzugter Ausführungsform des Verfahrens wird der Nachweis der neutrophilen extrazellulären Fallen bei der Diagnose einer infektiösen, inflammatorischen, autoimmunologischen und/oder thrombotischen Erkrankung herangezogen. Bevorzugt handelt es sich bei den Erkrankungen um Sepsis, Erkrankungen mit einem erhöhten Thromboserisiko und/oder diverse Autoimmunologieerkrankungen.

Der Begriff "Biofluid" bezeichnet eine menschliche oder tierische Körperflüssigkeit, insbesondere Blut, die neutrophile extrazelluläre Fallen enthalten kann.

Unter einem "Nachweis neutrophiler extrazellulärer Fallen" ist jede Form des qualitativen oder quantitativen Nachweises des Vorliegens von neutrophilen extrazellulären Fallen gemeint. Dies kann insbesondere auch die implizite und/oder explizite Bestimmung der Konzentration von neutrophilen extrazellulären Fallen einschließen.

Bei einem quantitativen Nachweis wird die Menge, die Konzentration und/oder die Aktivität des Analyten, hier der neutrophilen extrazellulären Fallen, in der Probe gemessen. Von dem Begriff des "quantitativen Nachweises" sind auch semiquantitative Methoden umfasst, die nur die ungefähre Menge, Konzentration und/oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Ausführungsbeispiele der Erfindung werden anhand einer Zeichnung näher erläutert. Dabei zeigen:
- FIG 1: schematisch ein automatisiertes optisches Analysesystem für Proben eines Biofluids,
- FIG 2: schematisch Details des Aufbaus des optischen Analysesystems,
- FIG 3, 4 und 5: jeweils ein Zytogramm, wobei die Streulichtintensität (B) gegenüber dem Absorptionsgrad (A) aufgetragen ist.

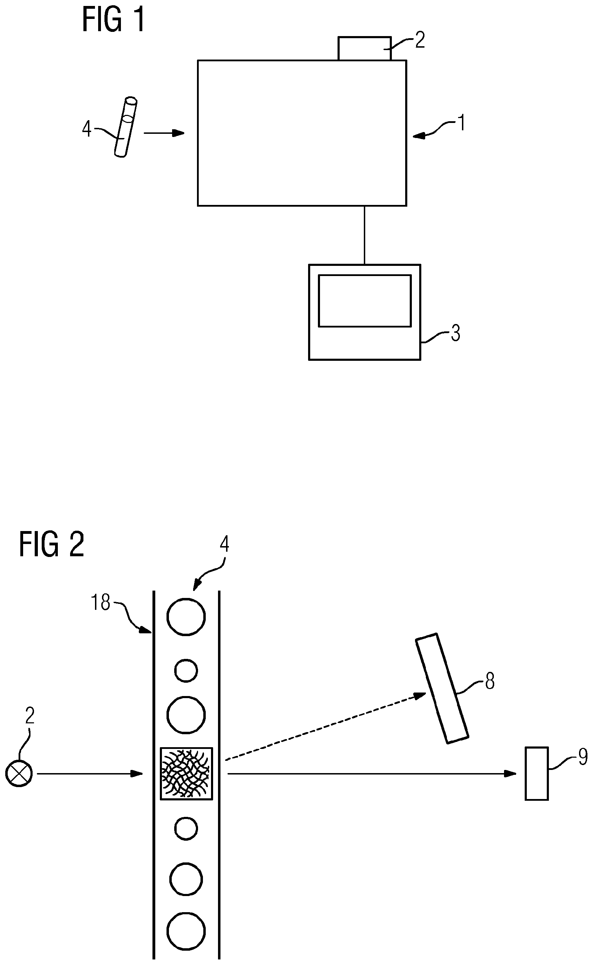

In FIG 1 ist schematisch ein optisches Analysesystem 1 zur Durchführung einer automatisierten Analyse der Probe eines Biofluids dargestellt. Das Analysesystem 1 umfasst hierbei eine Lichtquelle 2, insbesondere einen Laser, der ein Probenvolumen durchstrahlt. Eine Vielzahl von optischen Merkmalen, wie insbesondere partikelbezogene Streulichtintensitäten, Brechungsindizes, Lichtintensitätsabnahmen, Absorptionsgrade, Transmissionsgrade etc. werden durch Beobachtung des ein Probenvolumen durcheilenden Laserlichts in Streu-, Transmissionsgeometrie etc. erfasst.

Weiter ist dem Analysesystem 1 eine Ausgabeeinheit 3 zugeordnet. Über die Ausgabeeinheit 3 können über eine Vielzahl von Ausgabekanälen die jeweils ermittelten optischen Merkmale ausgegeben, dargestellt oder weiter ausgewertet werden. Über die Ausgabeeinheit 3 ist es insbesondere möglich, ein vollständiges Blutbild in tabellarischer Form mit Ausgabe aller relevanter Daten einschließlich der Fraktion an retikulierten Thrombozyten auszugeben. Zur Analyse wird eine Probe 4 eines Biofluids, insbesondere eine Blutprobe, dem Analysesystem 1 entsprechend zugeführt. Die anschließende Auswertung geschieht vollautomatisch einschließlich einer etwaigen Zuführung von Hilfs-, Färbestoffen usw.

In FIG 2 sind Details des Aufbaus des optischen Analysesystems 1 dargestellt. Licht der Lichtquelle 2, die als Halbleiterlaser ausgebildet ist und Licht einer Wellenlänge von 670 nm abstrahlt, wird auf die Probe 4 geleitet. Die Probe 4 befindet sich in einer Kapillare 18, die als Durchflusskapillare ausgebildet ist. In der Kapillare 18 befinden sich verschiedene Teilchen, die als Kreise mit unterschiedlichen Radien bzw. als Netz dargestellt sind, wobei das Netz eine neutrophile extrazelluläre Falle symbolisiert. Das Probenvolumen wird durchstrahlt und das Licht wechselwirkt mit der Probe. Ein Teil des Lichts fällt ohne Richtungsänderung (auf den zweiten Detektor 9, ein weiterer Teil des Lichts wird unter einem Winkel von 5 bis 15 Grad durch die Probe abgelenkt und trifft auf den ersten Detektor 8. Mittels von Signalen des zweiten Detektors 9 wird der Absorptionsgrad von einzelnen Teilchen in der Probe 4 ermittelt. Mittels von Signalen des ersten Detektors 8 wird die Streulichtintensität, die auf einzelne Teichen in der Probe 4 zurückzuführen ist, ermittelt.

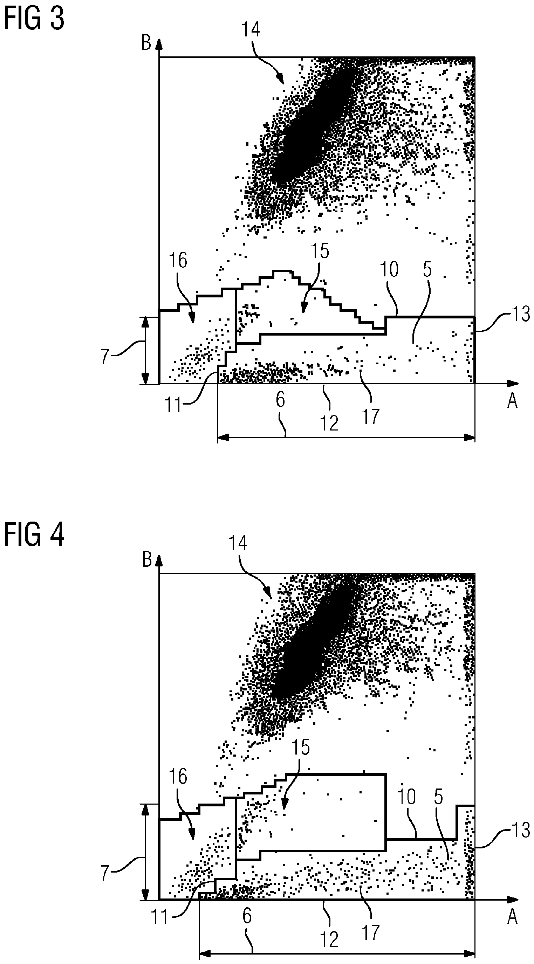

In FIG 3, FIG 4 und FIG 5 ist jeweils ein Zytogramm dargestellt, in dem die Streulichtintensität (B) gegenüber dem Absorptionsgrad (A) aufgetragen ist. Die erfassten partikelbezogenen Messwerte, die jeweils ein Tupel aus Streulichtintensität (B) und Absorptionsgrad (A) umfassen, sind als Ergebnis eines automatisierten Analyseverfahrens eingetragen. Aus einem Bereich 5 selektiver Messwerte kann die Anzahl an neutrophilen extrazellulären Fallen entnommen werden. Dieser Bereich umfasst einen Teilbereich 6 der gemessenen Absorptionsgrade und einen Teilbereich 7 der gemessenen Streulichtintensitäten. Der Bereich 5 ist hierbei insbesondere gegenüber den Messwerten von Erythrozyten und retikulierten Thrombozyten durch eine obere Grenze 10 der Streulichtintensität und gegenüber reifen Thrombozyten durch eine untere Grenze 11 des Absorptionsgrades abgetrennt. Weiter ist der Bereich 5 durch eine untere Grenze 12 der Streulichtintensität und einer oberen Grenze der Absorption 13 eingeschlossen. Über die eingezeichneten Grenzen kann die Anzahl der neutrophilen extrazellulären Fallen weitestgehend interferenzfrei bestimmt werden.

Zur Bestimmung der Konzentration von neutrophilen extrazellulären Fallen wird die bestimmte Anzahl der neutrophilen extrazellulären Fallen durch das Volumen der Probe des Biofluid 4, in dem die Anzahl bestimmt wurde, geteilt. Die Konzentration von neutrophilen extrazellulären Fallen wird in den Einheiten Anzahl von neutrophilen extrazellulären Fallen pro Mikroliter Probe des Biofluid 4 angegeben. Die Angabe der Anzahl der neutrophilen extrazellulären Fallen erfolgt dabei in einer beliebigen Einheit, die direkt proportional zur Anzahl der partikelbezogenen Messwerte ist, die neutrophilen extrazellulären Fallen zugeordnet sind.

Deutlich erkennbar und unterscheidbar sind in dem Zytogramm Messwerte verschiedener Populationen von Teilchen zu erkennen und zu unterscheiden, insbesondere eine große Population Erythrozyten 14, eine kleinere Population retikulierter Thrombozyten 15, eine Population reifer Thrombozyten 16 und eine Population neutrophiler extrazellulärer Fallen 17.

Die Grenze 10 wird anhand einer Häufigkeitsverteilung der gemessenen Streulichtintensitäten ermittelt und hierin eine Population der Erythrozyten, der retikulierten Thrombozyten bzw. der reife Thrombozyten in einem Bereich höherer Streulichtintensitäten und eine Population der neutrophilen extrazellulären Fallen in einem Bereich niedrigerer Streulichtintensitäten identifiziert. Als obere Grenze 10 des Teilbereiches der Streulichtintensität wird dann eine Streulichtintensität aus einem Bereich zwischen den beiden jeweiligen Populationen gewählt.

Die Grenze 11 wird anhand einer Häufigkeitsverteilung der gemessenen Absorptionsgrade ermittelt und hierin eine Population der Erythrozyten, der retikulierten Thrombozyten bzw. der reifen Thrombozyten in einem Bereich niedrigerer Absorptionsgrade und eine Population der neutrophilen extrazellulären Fallen in einem Bereich höherer Absorptionsgrade identifiziert. Als untere Grenze 11 des Teilbereiches des Absorptionsgrades wird dann ein Absorptionsgrad aus einem Bereich zwischen den beiden jeweiligen Populationen gewählt.

Die Grenze 12 wird so gewählt, dass mindestens 80 %, bevorzugt mindestens 90 %, besonders bevorzugt mindestens 95 % der Messwerte, die auf neutrophile extrazelluläre Fallen zurück gehen, eine größere Streulichtintensität als die Streulichtintensität, bei dem die Grenze 12 verläuft, aufweisen.

Die Grenze 13 wird so gewählt, dass mindestens 80 %, bevorzugt mindestens 90 %, besonders bevorzugt mindestens 95 % der Messwerte, die auf neutrophile extrazelluläre Fallen zurück gehen, einen kleineren Absorptionsgrad als den Absorptionsgrad, bei dem die Grenze 13 verläuft, aufweisen.

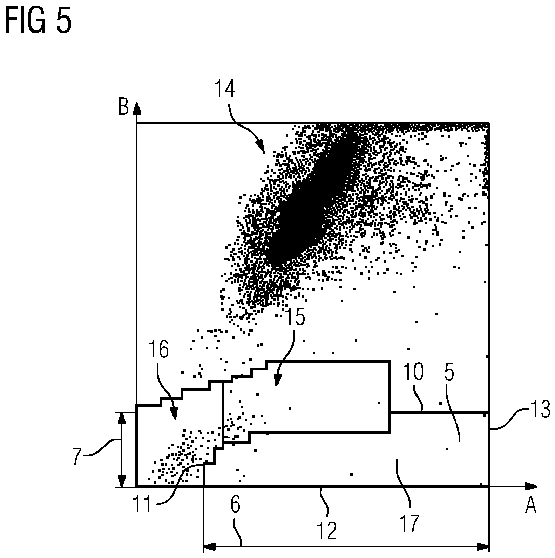

In FIG 3 und FIG 4 ist die Population neutrophiler extrazellulärer Fallen 17 vergleichsweise groß und die jeweilig zugehörigen Proben weisen eine hohe Konzentration von neutrophilen extrazellulären Fallen auf. In FIG 5 ist die Population neutrophiler extrazellulärer Fallen 17 vergleichsweise klein und die zugehörige Probe weist eine sehr niedrige Konzentration von neutrophilen extrazellulären Fallen auf. Bei denen zu FIG 3, 4 und 5 gehörigen Proben handelt es sich um drei voneinander verschiedene, humane Blutproben.

### Bezugszeichenliste

- 1: Analysesystem
- 2: Lichtquelle
- 3: Ausgabegerät
- 4: Probe Biofluid (Blutprobe)
- 5: Bereich selektierter Messwerte
- 6: Teilbereich Absorptionsgrad
- 7: Teilbereich Brechungsindex
- 8: erster Detektor
- 9: zweiter Detektor
- 10: obere Grenze Teilbereich Brechungsindex
- 11: untere Grenze Teilbereich Absorptionsgrad
- 12: untere Grenze Teilbereich Brechungsindex
- 13: obere Grenze Teilbereich Absorptionsgrad
- 14: Population Erythrozyten
- 15: Population retikulierte Thrombozyten
- 16: Population reife Thrombozyten
- 17: Population neutrophile extrazelluläre Fallen
- 18: Kapillare
- A: Absorptionsgrad
- B: Streulichtintensität

## Patentansprüche

1. Durchflusszytometrisches Verfahren zum Nachweis von neutrophilen extrazellulären Fallen in einer Probe (4) eines Biofluids, wobei der Probe (4) des Biofluids ein für Nukleinsäure selektiver Farbstoff zugeführt wird, wobei nach der Anfärbung in der Probe (4) im Absorptionsbereich des Farbstoffes eine Vielzahl von optischen, partikelbedingten Messwerten jeweils als Tupel aus einem Messwert eines ersten optischen Merkmals und eines zweiten optischen Merkmals bestimmt wird, wobei Messwerte des ersten optischen Merkmals innerhalb eines Teilbereiches (6) aller gemessenen Werte des ersten optischen Merkmals und des zweiten optischen Merkmals innerhalb eines Teilbereiches (7) aller gemessenen Werte des zweiten optischen Merkmals selektiert werden, und wobei die Anzahl der selektierten Messwerte zum Nachweis der neutrophilen extrazellulären Fallen mit einem vorbestimmten Grenzwert verglichen wird, wobei es sich bei dem ersten optischen Merkmal um eine Streulichtintensität und dem zweiten optischen Merkmal um die Lichtintensitätsabnahme, bevorzugt den Absorptionsgrad, handelt.

2. Verfahren nach Anspruch 1, wobei die Streulichtintensität die Intensität des um einen Winkel innerhalb eines Winkelbereichs von 5 bis 15 Grad, bevorzugt von 5 bis 8 Grad, durch die Probe abgelenkten Lichts ist.

3. Verfahren nach einem der Ansprüche 1 oder 2, wobei mittels der Streulichtintensität der Brechungsindex ermittelt wird oder die Streulichtintensität als ein Maß für den Brechungsindex verwendet wird und wobei es sich bei dem Brechungsindex um das erste optische Merkmal handelt.

4. Verfahren nach einem der vorhergehenden Ansprüche, welches, insbesondere vollautomatisiert, in einem Analysesystem (1) zur optischen Analyse einer Probe (4) eines Biofluids durchgeführt wird.

5. Verfahren nach Anspruch 4, wobei das Analysesystem (1) ein Durchflusszytometer umfasst.

6. Verfahren nach einem der vorhergehenden Ansprüche, wobei die obere Grenze (10) des Teilbereiches der Streulichtintensität, insbesondere veränderlich über den Absorptionsgrad, derart gewählt wird, dass die Streulichtintensitäten der neutrophilen extrazellulären Fallen von Streulichtintensitäten von retikulierten Thrombozyten, reifen Thrombozyten und Erythrozyten separiert werden.

7. Verfahren nach einem der vorhergehenden Ansprüche, wobei die untere Grenze (11) des Teilbereiches des Absorptionsgrades, insbesondere veränderlich über die Streulichtintensität, derart gewählt wird, dass Absorptionsgrade neutrophiler extrazellulärer Fallen von Absorptionsgraden retikulierter Thrombozyten separiert werden.

8. Verfahren nach einem der vorhergehenden Ansprüche, wobei in der Probe (4) des Biofluids die Absorptionsgrade von retikulierten Thrombozyten, reifen Thrombozyten und/oder Erythrozyten gemessen werden.

9. Verfahren nach einem der vorhergehenden Ansprüche, wobei in der Probe (4) des Biofluids die Brechungsindizes von retikulierten Thrombozyten, reifen Thrombozyten und/oder Erythrozyten gemessen werden.

10. Verfahren nach einem der vorhergehenden Ansprüche, wobei die Anzahl der selektierten Messwerte zum qualitativen und/oder quantitativen Nachweis der neutrophilen extrazellulären Fallen herangezogen wird.

11. Verfahren nach einem der vorhergehenden Ansprüche, wobei die Anzahl der selektierten Messwerte zur Bestimmung der Konzentration der neutrophilen extrazellulären Fallen herangezogen wird.

12. Verfahren nach einem der vorhergehenden Ansprüche, wobei es sich bei dem für Nukleinsäure selektiven Farbstoff um Oxazin 750 handelt.

## Claims

1. Flow cytometry method for detecting neutrophil extracellular traps in a sample (4) of a biofluid, wherein a dye selective for nucleic acid is supplied to the sample (4) of the biofluid, wherein a multiplicity of optical, particlerelated measurement values is determined in the sample (4) after staining within the absorption range of the dye, in each case as a tuple composed of a measurement value of a first optical feature and of a second optical feature, wherein measurement values of the first optical feature within a subregion (6) of all measured values of the first optical feature and of the second optical feature within a subregion (7) of all measured values of the second optical feature are selected, and wherein the number of selected measurement values is compared with a predetermined limit value in order to detect the neutrophil extracellular traps, wherein the first optical feature is a scattered-light intensity and the second optical feature is the light-intensity reduction, preferably the absorptance.

2. Method according to Claim 1, wherein the scattered-light intensity is the intensity of the light deflected by the sample by an angle within an angle range from 5 to 15 degrees, preferably from 5 to 8 degrees.

3. Method according to either of Claims 1 and 2, wherein the refractive index is ascertained by means of the scattered-light intensity or the scattered-light intensity is used as a measure of the refractive index and wherein the refractive index is the first optical feature.

4. Method according to any of the preceding claims, which is carried out, in particular in a fully automated manner, in an analysis system (1) for the optical analysis of a sample (4) of a biofluid.

5. Method according to Claim 4, wherein the analysis system (1) comprises a flow cytometer.

6. Method according to any of the preceding claims, wherein the upper limit (10) of the subregion of the scattered-light intensity, in particular variable over the absorptance, is chosen such that the scattered-light intensities of the neutrophil extracellular traps are separated from scattered-light intensities of reticulated thrombocytes, mature thrombocytes and erythrocytes.

7. Method according to any of the preceding claims, wherein the lower limit (11) of the subregion of the absorptance, in particular variable over the scattered-light intensity, is chosen such that absorptances of neutrophil extracellular traps are separated from absorptances of reticulated thrombocytes.

8. Method according to any of the preceding claims, wherein the absorptances of reticulated thrombocytes, mature thrombocytes and/or erythrocytes are measured in the sample (4) of the biofluid.

9. Method according to any of the preceding claims, wherein the refractive indices of reticulated thrombocytes, mature thrombocytes and/or erythrocytes are measured in the sample (4) of the biofluid.

10. Method according to any of the preceding claims, wherein the number of selected measurement values is used for the qualitative and/or quantitative detection of the neutrophil extracellular traps.

11. Method according to any of the preceding claims, wherein the number of selected measurement values is used for the determination of the concentration of the neutrophil extracellular traps.

12. Method according to any of the preceding claims, wherein the dye selective for nucleic acid is oxazine 750.

## Revendications

1. Procédé de cytométrie en flux pour déceler des pièges extracellulaires de neutrophiles dans un échantillon (4) d'un fluide biologique, dans lequel on apporte un colorant sélectif pour des acides nucléiques à l'échantillon (4) du fluide biologique, dans lequel, après la coloration de l'échantillon (4), on détermine, dans le domaine d'absorption du colorant, une pluralité de valeurs de mesure optiques impliquées par une particule respectivement sous la forme d'un tuple composé d'une valeur de mesure d'une première caractéristique optique et d'une deuxième caractéristique optique, dans lequel on sélectionne des valeurs de mesure de la première caractéristique optique dans une plage (6) partielle de toutes les valeurs mesurées de la première caractéristique optique et de la deuxième caractéristique optique dans une plage (7) partielle de toutes les valeurs mesurées de la deuxième caractéristique optique, et dans lequel on compare le nombre des valeurs de mesure sélectionnées pour déceler les pièges extracellulaires de neutrophiles à une valeur limite déterminée à l'avance, dans lequel la première caractéristique optique est une intensité de lumière diffusée et la deuxième caractéristique est une décroissance d'intensité de la lumière, de préférence un degré d'absorption.

2. Procédé suivant la revendication 1, dans lequel l'intensité de la lumière diffusée est l'intensité de la lumière déviée par l'échantillon d'un angle dans une plage angulaire de 5 à 15 degrés, de préférence de 5 à 8 degrés.

3. Procédé suivant l'une des revendications 1 ou 2, dans lequel on détermine l'indice de réfraction au moyen de l'intensité de la lumière diffusée ou on utilise l'intensité de la lumière diffusée comme une mesure de l'indice de réfraction, et dans lequel l'indice de réfraction est la première caractéristique optique.

4. Procédé suivant l'une des revendications précédentes, que l'on effectue, en particulier d'une manière entièrement automatisée, dans un système (1) d'analyse pour l'analyse optique d'un échantillon (4) d'un fluide biologique.

5. Procédé suivant la revendication 4, dans lequel le système (1) d'analyse est un cytomètre en flux.

6. Procédé suivant l'une des revendications précédentes, dans lequel on choisit la limite (10) supérieure de la plage partielle de l'intensité de la lumière diffusée, en particulier variable en fonction du degré d'absorption, de manière à séparer les intensités de la lumière diffusée des pièges extracellulaires de neutrophiles d'intensités de la lumière diffusée de thrombocytes réticulés, de thrombocytes matures et d'érythrocytes.

7. Procédé suivant l'une des revendications précédentes, dans lequel on choisit la limite (11) inférieure de la plage partielle du degré d'absorption variable, en particulier en fonction de l'intensité de la lumière diffusée, de manière à séparer des degrés d'absorption de pièges extracellulaires de neutrophiles de degrés d'absorption de thrombocytes réticulés.

8. Procédé suivant l'une des revendications précédentes, dans lequel, on mesure, dans l'échantillon (4) du fluide biologique, les degrés d'absorption de thrombocytes matures et/ou d'érythrocytes.

9. Procédé suivant l'une des revendications précédentes, dans lequel, on mesure, dans l'échantillon (4) du fluide biologique, les indices de réfraction de thrombocytes réticulés, de thrombocytes matures et/ou d'érythrocytes.

10. Procédé suivant l'une des revendications précédentes, dans lequel on tire parti du nombre de valeurs de mesure sélectionnées pour déceler qualitativement et/ou quantitativement les pièges extracellulaires de neutrophiles.

11. Procédé suivant l'une des revendications précédentes, dans lequel on tire parti du nombre de valeurs de mesure sélectionnées pour la détermination de la concentration des pièges extracellulaires de neutrophiles.

12. Procédé suivant l'une des revendications précédentes, dans lequel le colorant sélectif pour des acides nucléiques est l'oxazine 750.
